# EUROPÄISCHE PATENTANMELDUNG

(11) **EP 1 933 067 A1**
(43) Veröffentlichungstag der Anmeldung: **18.06.2008**
(21) Anmeldenummer: 07019439.4
(22) Anmeldetag: 04.10.2007
(51) Int. Cl.: F16J 15/02, F16L 5/08

(54) **Durchführungsdichtung**

(30) Priorität: 13.12.2006 DE 102006058701
(71) Anmelder: Rheinmetall Defence Electronics GmbH, 28309 Bremen (DE)
(72) Erfinder: Meyer, Hermann, 28816 Stuhr (DE)
(74) Vertreter: Thul, Hermann

(57) **Zusammenfassung**

Durchführungsdichtung (1), aufweisend ein Abdichtelement (2) aus elastischem Material, zumindest einen Durchlass (3) für mindestens eine Leitung (11) zwischen zwei gegenüberliegenden Seiten (Stirnseiten, 2a, 2b) des Abdichtelements (2) sowie eine Spannvorrichtung zur Ausübung einer Druckkraft auf die Stirnseiten (2a, 2b) des Abdichtelements (2).

## Beschreibung

Die vorliegende Erfindung betrifft eine Durchführungsdichtung zur wasser-, gas- und druckdichten Durchführung von Leitungen beispielsweise durch eine Wand.

Bei Gebäuden oder Fahrzeugen aller Art ist es, insbesondere im militärischen Umfeld, oftmals notwendig, Leitungen wasser-, gas- und druckdicht durch eine Wand zwischen zwei Volumina hindurchzuführen. Leitungen sind dabei beispielsweise Kabel, Rohre oder Schläuche.

Es ist die Aufgabe der vorliegenden Erfindung, eine Durchführungsdichtung zur Abdichtung einer Durchführungsöffnung für Leitungen in einer Wand bereitzustellen, die einfach aufgebaut und schnell sowie ohne Werkzeug montierbar und demontierbar ist.

Gelöst wird diese Aufgabe durch die Merkmale des Patentanspruchs 1. Vorteilhafte Ausgestaltungsformen sind den Patentansprüchen 2 bis 9 zu entnehmen. Patentanspruch 10 betrifft ein Land-, Luft- oder Wasserfahrzeug mit einer erfindungsgemäßen Durchführungsdichtung.

Eine Durchführungsdichtung nach Patentanspruch 1 weist ein Abdichtelement aus einem elastischen Material auf. Zwischen zwei gegenüberliegenden Seiten, den Stirnseiten, des Abdichtelements ist zumindest ein Durchlass für mindestens eine Leitung eingebracht. Weiterhin weist die Durchführungsdichtung eine Spannvorrichtung zur Ausübung einer Druckkraft auf die Stirnseiten des Abdichtelements auf. Bei den Durchlässen handelt es sich um Ausnehmungen, deren Form der Querschnittsfläche der hindurchzuführenden Leitung entspricht. Die Größe des Durchlasses ist bevorzugt exakt so groß wie oder geringfügig größer als die Größe der durchzuführenden Leitung. In vorteilhafter Weise sind die Stirnseiten des Abdichtelements zueinander parallel.

Das Abdichtelement besteht bevorzugt aus einem im Wesentlichen inkompressiblen Material, dessen Volumen auch bei einer Kraftausübung auf das Material im Wesentlichen unverändert bleibt, so dass die von der Spannvorrichtung ausgeübte Druckkraft eine Stauchung des Abdichtelements in Kraftrichtung und eine Ausdehnung senkrecht zu der Druckkraft bewirkt. Diese Ausdehnung bewirkt einerseits, dass die Durchführungsdichtung in einem Presssitz in der Durchführungsöffnung der Wand gehalten wird und diese abdichtet. Andererseits werden die Durchlässe im Abdichtelement für die Leitungen verkleinert und somit ebenfalls abgedichtet. Aufgrund der Elastizität des Materials nimmt das Abdichtelement nach dem Lösen der Spannvorrichtung seine ursprüngliche Form wieder an und kann einfach aus der Montageposition entnommen werden. In vorteilhafter Weise besteht das Abdichtelement aus Gummi.

In einer bevorzugten Ausführungsform sind die Stirnseiten des Abdichtelements rechteckig ausgestaltet. Das Abdichtelement hat demnach die Form eines Quaders. Dies hat den Vorteil, dass eine rechteckige Durchführungsöffnung einfach und präzise in eine Wand einbringbar ist. Alternativ sind die Stirnseiten des Abdichtelements kreisförmig oder oval ausgestaltet. Bei kreisförmigen Stirnseiten hat das Abdichtelement demnach die Form eines Zylinders.

In einer vorteilhaften Ausgestaltungsform sind die Stirnseiten des Abdichtelements unterschiedlich groß. Das Abdichtelement hat somit bei rechteckigen Stirnseiten die Form eines Pyramidenstumpfs, bei kreisförmigen Stirnseiten die Form eines Kegelstumpfs. Die Mantelflächen des Abdichtelements verlaufen demnach schräg, also nicht rechtwinklig, zu den Stirnseiten. Der Begriff Mantelfläche bezeichnet die Bereiche der äußeren Oberfläche des Abdichtelements, die nicht die Stirnseiten bilden. Die schräge Ausgestaltung der Mantelflächen bietet den Vorteil, dass die Durchführungsdichtung einfacher in die Durchführungsöffnung in der Wand einbringbar ist. Darüber hinaus sind Fertigungstoleranzen in der Größe der Durchführungsdichtung sowie der Durchführungsöffnung ausgleichbar.

Bevorzugt weist das Abdichtelement einen Einschnitt zwischen einer Mantelfläche und einem Durchlass auf. Dadurch läßt sich die Leitung vereinfacht seitlich durch das Abdichtelement in den Durchlass hineindrücken. Ein Durchstecken der Leitung durch den Durchlass, was insbesondere bei bereits mit Steckern oder sonstigen Anschlüssen versehenenen Leitungen nicht möglich ist, wird dadurch vermieden. Die Einschnitte sind vorteilhaft dick genug, um das seitliche Hineindrücken der Leitung in das Abdichtelement zu ermöglichen, gleichzeitig aber so dünn, dass sie bei der Betätigung der Spannvorrichtung abgedichtet werden.

In einer vorteilhaften Ausgestaltungsform besteht die Spannvorrichtung aus Platten auf den Stirnseiten des Abdichtelements, mindestens einer Rändelschraube durch die Platten und das Abdichtelement sowie einem Spannhebel für jede Rändelschraube. Bei dem Spannhebel handelt es sich um einen Hebel, der exzentrisch auf einer Drehachse gelagert ist. Durch das Umlegen des Spannhebels verringert sich der Abstand zwischen den beiden Platten, wodurch eine Druckkraft auf die Stirnseiten des Abdichtelements ausgeübt wird. Dadurch wird die Durchführungsdichtung in den Durchbruch der Trennwand eingepresst. Durch die Rändelschrauben kann eine Voreinstellung des Pressvolumens an der Durchführungsdichtung vorgenommen werden.

In einer alternativen Ausgestaltungsform besteht die Spannvorrichtung aus Platten auf den Stirnseiten des Abdichtelements, mindestens einem Gewindebolzen durch die Platten und das Abdichtelement sowie einem Spannhebel und einer Rändelmutter für jeden Gewindebolzen. Die Funktionsweise der Spannvorrichtung entspricht derjenigen der vorstehend beschriebenen Ausführungsform. Durch einen Austausch des Gewindebolzens ist die Spannvorrichtung einfach an die Dicke des Abdichtelements bzw. der Platten der Spannvorrichtung anpassbar.

Bevorzugt steht eine der Platten der Spannvorrichtung zumindest an zwei gegenüberliegenden Seiten über die Stirnfläche des Abdichtelements hinaus. Dadurch wird bei der Montage ein Durchdrücken des Abdichtelements durch die Durchführungsöffnung in der Wand verhindert.

Eine erfindungsgemäße Durchführungsdichtung wird vorteilhaft in - insbesondere militärischen - Land-, Luft- oder Wasserfahrzeugen eingesetzt.

Die vorliegende Erfindung soll anhand eines Ausführungsbeispiels näher erläutert werden. Dabei zeigen:
- Figur 1: eine seitliche Schnittdarstellung einer Durchführungsdichtung und
- Figur 2: eine Aufsicht auf ein Abdichtelement.

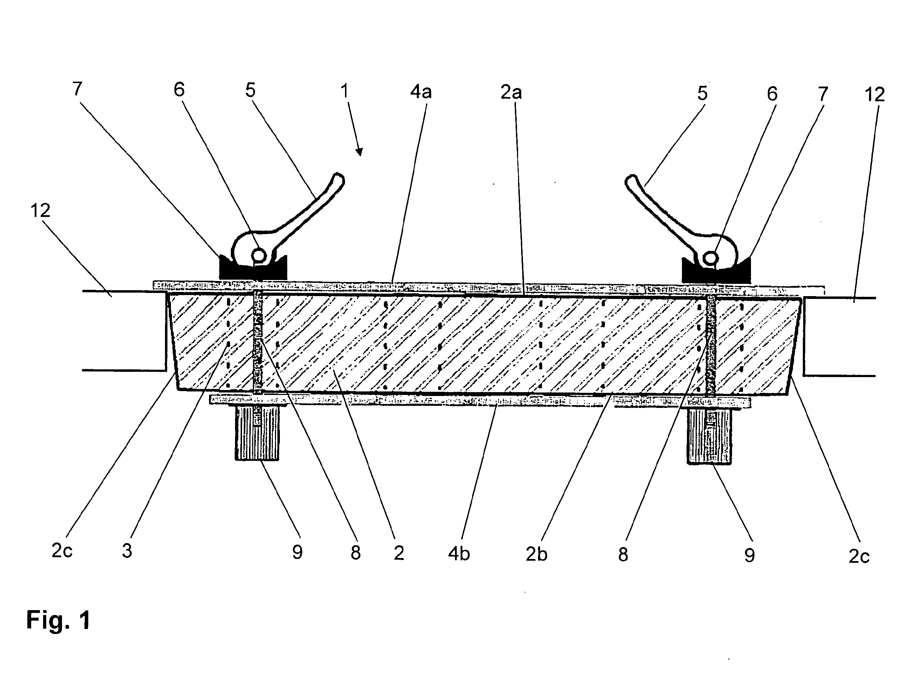

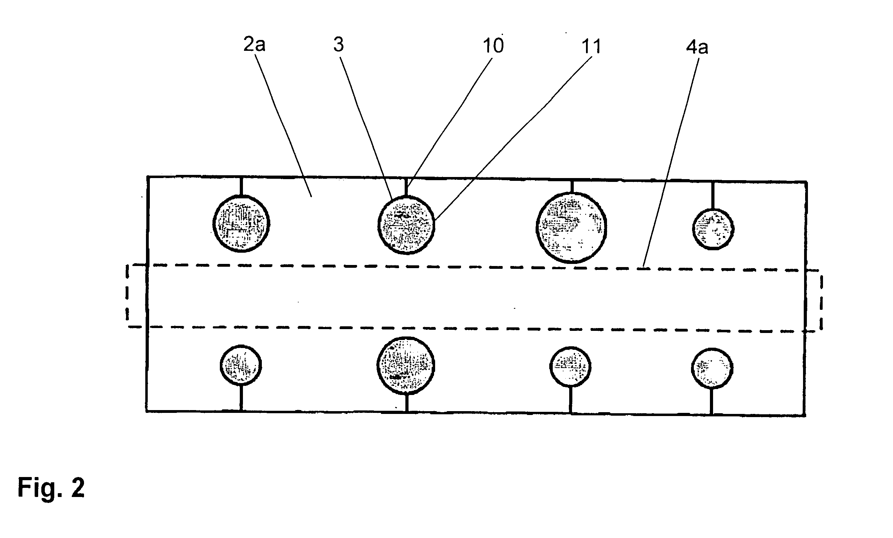

Figur 1 zeigt die Seitenansicht eines Teilschnitts durch eine erfindungsgemäße Durchführungsdichtung 1. Die Durchführungsdichtung 1 weist ein Abdichtelement 2 und eine Spannvorrichtung auf. Das Abdichtelement 2 besteht aus einem Pyramidenstumpf aus Gummi. In das Abdichtelement 2 sind gestrichelt angedeutete Bohrungen 3 eingebracht, die sich zwischen den parallelen Stirnseiten 2a und 2b des Abdichtelements 2 erstrecken und den Durchmesser der durch die Durchführungsdichtung hindurchzuführenden Leitungen 11 (siehe Figur 2) aufweisen. Die Stirnseiten 2a und 2b sind unterschiedlich groß, so dass die Mantelflächen 2c des Abdichtelements 2 schräg verlaufen.

Die Spannvorrichtung besteht aus den beiden Metallplatten 4a und 4b, zwei Spannhebeln 5, zwei Spannhebelbetten 7, zwei Gewindestangen 8 und zwei Rändelmuttern 9. Die Metallplatten 4a und 4b liegen auf den Stirnseiten 2a bzw. 2b des Abdichtelements 2 auf. Die Gewindebolzen 8 sind durch das Abdichtelement 2 sowie die Metallplatten 4a und 4b hindurchgeführt. Auf einem Ende der Gewindebolzen 8 sitzen die Rändelmuttern 9, auf dem anderen Ende die Spannhebel 5. Die Gewindebolzen 8 sind auch durch die Spannhebelbetten 7 hindurchgeführt. Die Metallplatte 4a steht an zwei gegenüberliegenden Seiten der Stirnfläche 2a über.

Figur 2 zeigt eine Aufsicht auf das Abdichtelement 2. Es ist erkennbar, dass die gestrichelt eingezeichnete Metallplatte 4a über die kurzen Seiten der Stirnseite 2a des Abdichtelements 2 übersteht. Im vorliegenden Ausführungsbeispiel verläuft die Metallplatte 4a zwischen zwei Reihen mit Bohrungen 3.

Die durchzuführenden Kabel 11 sind in die Bohrungen 3 eingebracht. Die Größe der Bohrungen 3 ist dabei abhängig von der Größe der jeweiligen Kabel 11. Durch Einschnitte 10, die sich über die gesamte Höhe des Abdichtelements 2 von den Bohrungen 3 zu der Mantelfläche des Abdichtelements 2 erstrecken, können auch bereits mit Steckern versehene Kabel 11 von der Seite in die Bohrungen 3 eingebracht werden.

Zur Montage wird die mit Kabeln 11 versehene Durchführungsdichtung 1 in die Durchführungsöffnung einer Trennwand 12 eingebracht. Aufgrund der schrägen Mantelfläche 2c zentriert sich das Abdichtelement 2 automatisch. Die überstehende Metallplatte 4a verhindert, dass das Abdichtelement 2 durch die Trennwand 12 hindurchrutscht.

In einem nächsten Schritt werden die Spannhebel 5 umgelegt. Aufgrund der Form der Spannhebel 5 vergrößert sich beim Umlegen der Abstand der Drehachsen 6 der Spannhebel 5 zu der Metallplatte 4a. Dadurch verringert sich der Abstand der Metallflächen 4a und 4b zueinander, was zur Ausübung einer Druckkraft auf die Stirnseiten 2a und 2b des Abdichtelements 2 führt. Aufgrund dieser Druckkraft verformt sich das aus Gummi bestehende Abdichtelement 2 derart, dass es sich in Richtung der Mantelflächen 2c ausdehnt und die Durchführungsdichtung 1 in die Durchführungsöffnung der Trennwand 12 einpresst. Gleichzeitig werden die Einschnitte 10 und eventuell vorhandene Luftspalte zwischen den Kabeln 11 und den Bohrungen 3 abgedichtet. Bei der Demontage werden die Spannhebel 5 wieder gelöst. Dadurch nimmt das Abdichtelement seine ursprüngliche Form an und die Durchführungsdichtung 1 ist aus der Trennwand 12 entnehmbar.

Das optionale Spannhebelbett 7 dient einerseits zur Führung des Spannhebels 5, andererseits zur Abdichtung der Ausnehmungen in der Metallplatte 4a für die Gewindebolzen 8. Die Ausnehmungen in der Metallplatte 4b für die Gewindebolzen 8 werden durch die Rändelmuttern 9 abgedichtet. Optional sind zwischen der Metallplatte 4b und den Rändelmuttern 9 Dichtungen, beispielsweise in Form von Gummiringen, angeordnet. Durch die Rändelschrauben 9 ist der Abstand der beiden Metallplatten 4a und 4b zueinander und somit die auf das Abdichtelement 2 ausgeübte Druckkraft einstellbar. Damit ist auch das Pressvolumen bzw. die Einpresskraft der Durchführungsdichtung 1 in der Durchführungsöffnung der Trennwand 12 einstellbar.

## Patentansprüche

1. Durchführungsdichtung (1), aufweisend ein Abdichtelement (2) aus elastischem Material, zumindest einen Durchlass (3) für mindestens eine Leitung (11) zwischen zwei gegenüberliegenden Seiten (Stirnseiten, 2a, 2b) des Abdichtelements (2) sowie eine Spannvorrichtung zur Ausübung einer Druckkraft auf die Stirnseiten (2a, 2b) des Abdichtelements (2).

2. Durchführungsdichtung (1) nach Anspruch 1, **dadurch gekennzeichnet, dass** das Abdichtelement (2) aus Gummi besteht.

3. Durchführungsdichtung (1) nach einem der Ansprüche 1 oder 2, **dadurch gekennzeichnet, dass** die Stirnseiten (2a, 2b) des Abdichtelements (2) rechteckig ausgestaltet sind.

4. Durchführungsdichtung (1) nach einem der Ansprüche 1 oder 2, **dadurch gekennzeichnet, dass** die Stirnseiten (2a, 2b) des Abdichtelements (2) kreisförmig oder oval ausgestaltet sind.

5. Durchführungsdichtung (1) nach einem der Ansprüche 1 bis 4, **dadurch gekennzeichnet, dass** die Stirnseiten (2a, 2b) des Abdichtelements (2) unterschiedlich groß sind.

6. Durchführungsdichtung (1) nach einem der Ansprüche 1 bis 5, **gekennzeichnet durch** einen Einschnitt (10) im Abdichtelement (2) zwischen einer Mantelfläche (2c) des Abdichtelements (2) und einem Durchlass (3).

7. Durchführungsdichtung (1) nach einem der Ansprüche 1 bis 6, **dadurch gekennzeichnet, dass** die Spannvorrichtung aus Platten (4a, 4b) auf den Stirnseiten (2a, 2b) des Abdichtelements (2), mindestens einer Rändelschraube durch die Platten (4a, 4b) und das Abdichtelement (2) sowie einem Spannhebel (5) für jede Rändelschraube besteht.

8. Durchführungsdichtung (1) nach einem der Ansprüche 1 bis 6, **dadurch gekennzeichnet, dass** die Spannvorrichtung aus Platten (4a, 4b) auf den Stirnseiten (2a, 2b) des Abdichtelements (2), mindestens einem Gewindebolzen (8) durch die Platten (4a, 4b) und das Abdichtelement (2) sowie einem Spannhebel (5) und einer Rändelmutter (9) für jeden Gewindebolzen (8) besteht.

9. Durchführungsdichtung (1) nach Anspruch 7 oder 8, **dadurch gekennzeichnet, dass** eine der Platten (4a) der Spannvorrichtung zumindest an zwei gegenüberliegenden Seiten über die Stirnfläche (2a) des Abdichtelements (2) hinaussteht.

10. Land-, Luft- oder Wasserfahrzeug mit mindestens einer Durchführungsdichtung (1) nach einem der Ansprüche 1 bis 9.
